# EUROPÄISCHE PATENTSCHRIFT

(11) **EP 0 884 513 B1**
(45) Veröffentlichungstag und Bekanntmachung des Hinweises auf die Patenterteilung: **20.08.2003**
(21) Anmeldenummer: 98110498.7
(22) Anmeldetag: 09.06.1998
(51) Int. Cl.: F16K 31/40

(54) **Ventilkombination**
Valve combination
Combinaison de soupape

(30) Priorität: 09.06.1997 DE 29710023 U
(43) Veröffentlichungstag der Anmeldung: 16.12.1998
(73) Patentinhaber: Bürkert Werke GmbH & Co., D-74653 Ingelfingen (DE)
(72) Erfinder: Dettmann, Heinrich, 74676 Niedernhall (DE)
(74) Vertreter: Degwert, Hartmut, Dipl.-Phys.

(56) Entgegenhaltungen:
- WO-A-97/18397
- DE-A- 3 514 900
- DE-B- 1 161 099
- DE-U- 1 944 163
- FR-A- 2 752 901
- US-A- 3 145 967

## Beschreibung

Die Erfindung betrifft eine Ventilkombination gemäß dem Oberbegriff von Patentanspruch 1.

Die derzeit in der Sanitärtechnik verwendeten Ventile sind im allgemeinen direktwirkende Hubanker-Magnetventile. Die Funktion solcher Ventile kann durch Ablagerungen von Kalk, Eisenoxid oder anderen im Wasser gelösten Stoffen zwischen den beweglichen Teilen, insbesondere zwischen Kern und Kernführungsrohr, gestört werden. Besonders gefährdet sind metallische Oberflächen bei höheren Temperaturen, wie sie bei Heißwasser auftreten oder durch die elektrische Leistung der Magnetspulen verursacht werden.

Weniger problematisch sind in dieser Hinsicht vorgesteuerte Membranventile. Für geeignete Vorsteuerventile, insbesondere Klöppel-Kleinventile, steht jedoch weder auf der fluidischen noch auf der elektrischen Seite eine Anschlußtechnik zur Verfügung, die den Forderungen der Sanitärtechnik entspricht: Die Verbindungen müssen leicht und zuverlässig sowie ohne Spezialwerkzeuge herstellbar, für Wartungszwecke lösbar und dennoch mechanisch hochbeanspruchbar sein.

Aus der DE-U-1 944 163 ist eine gattungsgemäße Ventilkombination mit einem Hauptventil und einem Vorsteuerventil bekannt, das in einem vom Hauptventil getrennten Gehäuse angeordnet ist. Das Gehäuse des Vorsteuerventils weist eine elektrische Anschlußvorrichtung für einen Elektromagneten und einen Kanal zur fluidischen Verbindung mit dem Hauptventil auf.

Aus der DE-A-35 14 900 ist ein Absperrventil bekannt, das durch ein Hilfsventil gesteuert wird. Das Hilfsventil ist in einem von dem Hauptventil getrennten Gehäuse vorgesehen, das von einem elektrischen Antrieb zur Betätigung des Hilfsventils umgeben ist. Das Hilfsventil steuert das Absperrventil mittels zweier Membranscheiben, die die Kolbenflächen eines Differentialkolbens bilden.

In der US-A-3 145 967 ist ein Hauptventil gezeigt, das durch ein elektromagnetisch betriebenes Vorsteuerventil gesteuert wird. Das Gehäuse des Vorsteuerventils ist mit dem Gehäuse des Hauptventils mechanisch und fluidisch verbunden.

Durch die Erfindung wird eine Ventilkombination geschaffen, die anstelle von herkömmlichen Magnetventilen in der Sanitärtechnik einsetzbar ist und sowohl auf der fluidischen als auch auf der elektrischen Seite die einfache und schnelle Herstellung von mechanisch hoch beanspruchbaren und zuverlässigen Verbindungen ermöglicht. Gemäß der Erfindung ist der Kabelkopf über eine Zwischen platte mit dem Hauptventil gekoppelt, wobei der Zwischenplatte mit Anschlußbohrungen versehen ist, in die aus dem Kabelkopf herausgeführt Rohrnippel eingesetzt sind. Der Kabelkopf, der vorzugsweise mit einer elektrischen Schnellanschlußeinrichtung für ein elektrisches Kabel versehen ist, ermöglicht auf der elektrischen Seite den schnellen und unproblematischen Kabelanschluß mit Zugentlastung. Auf der fluidischen Seite ermöglicht der Kabelkopf durch die Zwischenplatte die schnelle und unproblematische Verbindung mit dem Hauptventil, das vorzugsweise als Membranventil ausgebildet ist. Die Zwischenplatte ist vorzugsweise mit Rückschlagventilen auf der Seite des Hauptventils ausgestattet, die beim Aufsetzen des Kabelkopfes zwangsweise geöffnet werden. Der Austausch des Vorsteuerventils ist daher ohne Ausbau des Hauptventils und ohne Leckage möglich.

Weitere Vorteile und Merkmale der Erfindung ergeben sich aus der folgenden Beschreibung einer bevorzugten Ausführungsform und aus der Zeichnung, auf die Bezug genommen wird. In der Zeichnung zeigen:
Fig. 1 eine Schnittansicht der Ventilkombination;
Fig. 2 eine vergrößerte Schnittansicht des Kabelkopfes mit integriertem Vorsteuerventil;
Fig. 3 eine Schnittansicht entlang Linie III-III in Fig. 2; und
Fig. 4 eine vergrößerte Teilansicht aus Fig. 1.

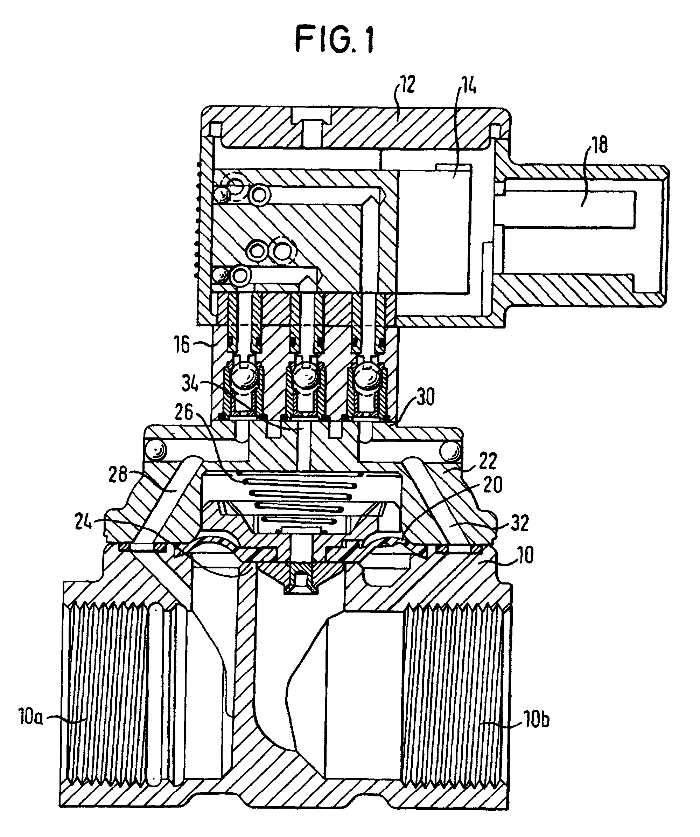

Die in Fig. 1 gezeigte Ventilkombination besteht aus einem als Membranventil ausgebildeten Hauptventil 10, einem Kabelkopf 12 mit darin integriertem Vorsteuerventil 14, das als Klöppel-Kleinventil ausgebildet ist, und einer fluidischen Kupplung 16, die das Hauptventil 10 mit dem Kabelkopf 12 verbindet. Der Kabelkopf 12 ist mit einer elektrischen Schnellanschlußeinrichtung 18 ausgestattet. Das Hauptventil 10 weist zwei koaxiale Medienanschlüsse 10a, 10b und einen seitlich angeordneten Ventilraum mit einer Membran 20 auf, die an ihrem Außenumfang zwischen einem seitlichen Flansch des Hauptventils 10 und einem Ventildeckel 22 eingespannt ist. Die Membran 20 wirkt mit einem ringförmigen Dichtsitz 24 zusammen, gegen den sie durch eine Druckfeder 26 belastet wird. Für die Vorsteuerung des Hauptventils 10 ist ein erster Kanal 28 vom Medienanschluß 10a durch den Ventildeckel 22 zu einem an diesem gebildeten Anschlußflansch 30 geführt. Ein zweiter Kanal 32 ist von dem Medienanschluß 10b durch den Ventildeckel 22 zum Anschlußflansch 30 geführt. Ein dritter Kanal 34 ist von dem Raum hinter der Membran 20 zum Anschlußflansch 30 geführt.

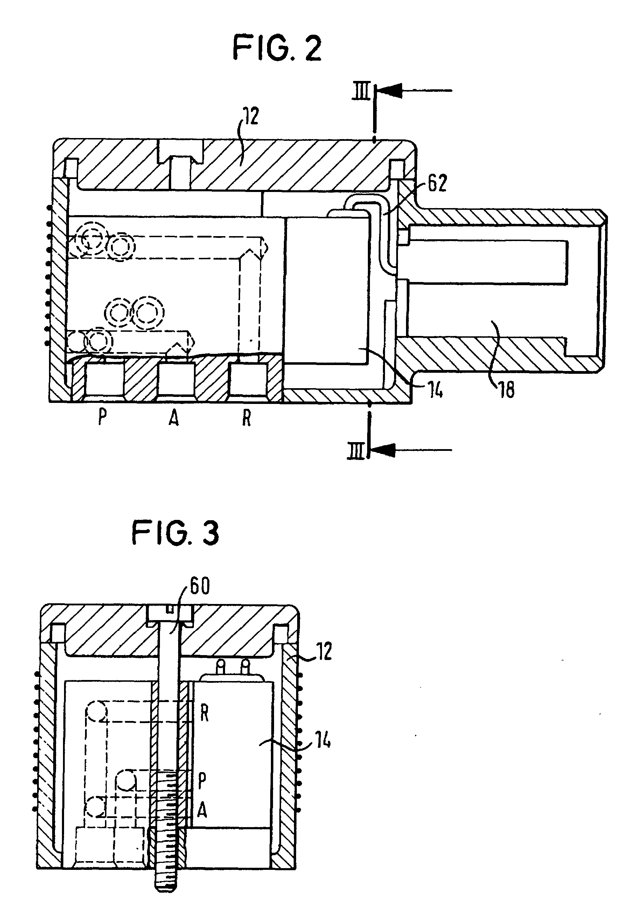

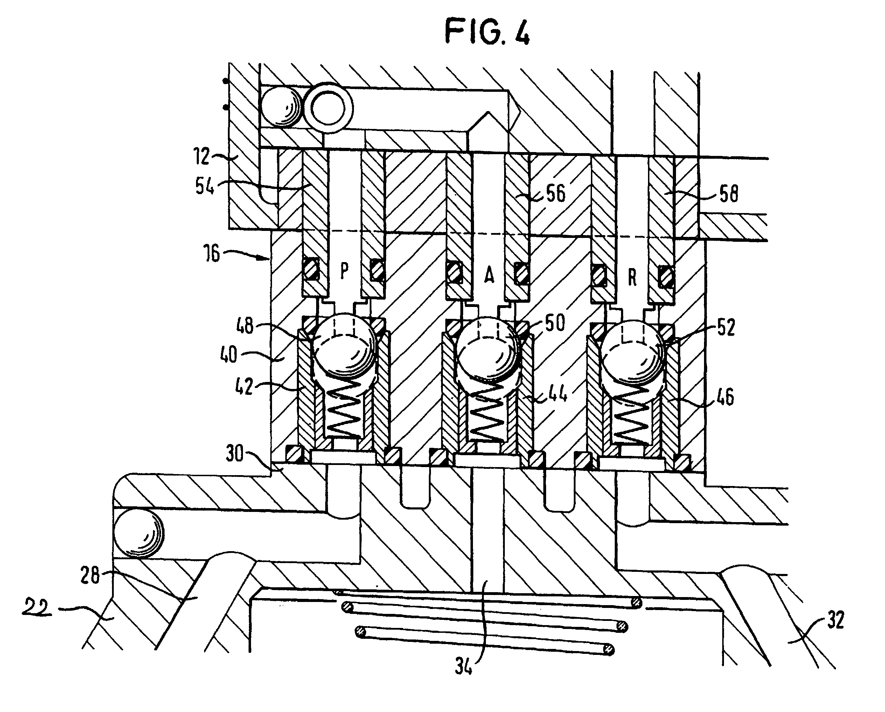

Die in Fig. 4 vergrößert gezeigte Kupplung 16 besteht aus einer auf den Anschlußflansch 30 aufgesetzten Zwischenplatte 40, die mit drei durchgehenden Anschlußbohrungen 42, 44, 46 versehen ist, die mit den Mündungsöffnungen der Kanäle 28, 32 und 34 fluchten. Auf der Seite des Anschlußflansches 30 ist jedes Ende der Anschlußbohrung 42, 44, 46 durch eine Ringdichtung zum Flansch 30 abgedichtet. Ferner ist auf der Seite des Anschlußflansches 30 in jede Anschlußbohrung 42, 44, 46 ein Rückschlagventil eingesetzt, das eine gegen eine Ringdichtung federbelastete Kugel 48, 50, 52 aufweist. Auf der Seite des Kabelkopfes 12 ist in die Enden der Anschlußbohrungen 42, 44, 46 je ein mit einer Ringdichtung versehener Rohrnippel 54, 56, 58 dichtend eingesetzt. Diese Rohrnippel 54, 56, 58 sind aus dem Gehäuse des Kabelkopfes 12 herausgeführt. Sie weisen an ihren freien Enden einen Betätigungsstößel auf, der die zugeordnete Kugel 48, 50 bzw. 52 von ihrer Ringdichtung abhebt, wenn der Kabelkopf 12 bündig auf die Zwischenplatte 40 aufgesetzt ist. Dieser zwangsweise geöffnete Zustand der Rückschlagventile ist in Fig. 4 durch gestrichelte Darstellung der Kugeln 48, 50, 52 veranschaulicht. Durch eine in Fig. 3 gezeigte Schraube 60, die das Gehäuse des Kabelkopfes 12 durchquert, ist dieser auf der Zwischenplatte 40 befestigt.

Das Vorsteuerventil 14 ist ein herkömmliches 3/2-Wegeventil. Ein solches Ventil hat aufgrund der Miniaturbauweise relativ empfindliche elektrische Anschlußlitzen 62 (Fig. 2). Diese sind im Inneren des Kabelkopfes 12 mit der elektrischen Schnellanschlußeinrichtung 18 verbunden und daher gut geschützt. Da das Vorsteuerventil 14 als herkömmliches 3/2-Wege-Miniaturventil ausgebildet sein kann, erübrigt sich eine detaillierte Beschreibung.

In Fig. 2 ist der Kabelkopf 12 losgelöst von dem Hauptventil 10 dargestellt. In diesem Zustand kann das Vorsteuerventil 14 als direktwirkendes Kleinventil verwendet werden. Zu diesem Zweck sind die fluidischen Anschlüsse P A R herausgeführt, in welche die Rohrnippel 54, 56, 58 eingesetzt werden können. Der Kabelkopf 12 kann auch ohne diese Rohrnippel mit seiner fluidischen Anschlußfläche auf einen geeignet ausgebildeten Gegenflansch aufgesetzt werden.

Bei der gezeigten Ausführungsform sind die Anschlußkonfigurationen der fluidischen Kupplung 16 auf beiden Seiten gleich. Bei unterschiedlichen Anschlußkonfigurationen zwischen Kabelkopf 12 und Hauptventil 10 kann über die fluidische Kupplung 16 eine Anpassung erfolgen.

Das als Membranventil ausgebildete Hauptventil 10 ist unempfindlich gegenüber Ablagerungen von Kalk, Eisenoxid oder anderen im Wasser gelösten Stoffen. Die Betätigung des Hauptventils 10 erfolgt mittels des Vorsteuerventils 14 über die Kanäle 28, 32 und 34 in bekannter Weise. Dadurch ergibt sich neben einer geringen elektrischen Ansteuerleistung auch eine besonders sichere Funktion des Hauptventils. Durch die fluidische Kupplung 16 mit integrierten Rückschlagventilen reduziert sich das Anschließen des Vorsteuerventils 14 auf ein Einsetzen der Rohrnippel in die Anschlußbohrungen, woraufhin die Schraube 60 angezogen wird, um den Kabelkopf 12 an der Zwischenplatte 40 und somit am Hauptventil 10 zu sichern. Die fluidische Kupplung ist mechanisch hoch belastbar. Darüber hinaus kann der Kabelkopf 12 mit dem Vorsteuerventil 14 vom Hauptventil 10 gelöst werden, ohne daß Flüssigkeit austritt, denn die Rückschlagventile schließen automatisch, wenn die Rohrnippel aus den Anschlußbohrungen herausgezogen werden.

Die für den elektrischen Anschluß des Vorsteuerventils 14 verwendete Schnellverbindungseinrichtung 18 schließlich ermöglicht das leichte Anschließen eines Kabels ohne Werkzeug, wobei zugleich eine Zugentlastung gewährleistet ist.

## Patentansprüche

1. Ventilkombination mit einem vorgesteuerten Hauptventil (10) und einem Vorsteuerventil (14), das in einem fluidisch mit dem Hauptventil (10) verbindbaren Kabelkopf (12) integriert ist, **dadurch gekennzeichnet, daß** der Kabelkopf (12) über eine Zwischenplatte (40) mit dem Hauptventil (10) gekoppelt ist, wobei die Zwischenplatte (40) mit Anschlußbohrungen (42, 44, 46) versehen ist, in die aus dem Kabelkopf (12) herausgeführte Rohrnippel (54, 56, 58) eingesetzt sind.

2. Ventilkombination nach Anspruch 1, **dadurch gekennzeichnet, daß** der Kabelkopf (12) eine elektrische Schnellanschlußeinrichtung (18) für ein elektrisches Kabel aufweist.

3. Ventilkombination nach Anspruch 1 oder 2, **dadurch gekennzeichnet, daß** das Vorsteuerventil (14) im Kabelkopf (12) als direktwirkendes Ventil verwendbar ist.

4. Ventilkombination nach einem der vorhergehenden Ansprüche, **dadurch gekennzeichnet, daß** die Zwischenplatte (40) verschiedene Anschlußkonfigurationen zwischen Kabelkopf (12) und Hauptventil (10) ineinander umsetzt.

5. Ventilkombination nach einem der vorhergehenden Ansprüche, **dadurch gekennzeichnet, daß** in den Anschlußbohrungen (42, 44, 46) auf der Seite des Hauptventils (10) Rückschlagventile (48, 50, 52) angeordnet sind.

6. Ventilkombination nach Anspruch 5, **dadurch gekennzeichnet, daß** die Rückschlagventile (48, 50, 52) durch Einsetzen der Rohrnippel (54, 56, 58) in die Anschlußbohrungen (42, 44, 46) zwangsweise geöffnet werden.

7. Ventilkombination nach einem der vorstehenden Ansprüche, **dadurch gekennzeichnet, daß** das Hauptventil (10) als Membranventil ausgebildet ist.

8. Ventilkombination nach einem der vorstehenden Ansprüche, **dadurch gekennzeichnet, daß** das Vorsteuerventil (14) als Klöppel-Kleinventil ausgebildet ist.

## Claims

1. A valve combination comprising a servo-controlled main valve (10) and a servo valve (14) integrated in a cable connector head (12) adapted for fluidic connection to the main valve (10), **characterized in that** the cable connector head (12) is coupled to the main valve (10) by means of an intermediate plate (40), the intermediate plate (40) being provided with connection bores (42, 44, 46) into which pipe nipples (54, 56, 58) protruding from the cable connector head (12) are inserted.

2. The valve combination according to claim 1, **characterized in that** the cable connector head (12) has an electrical quick connector (18) for an electric cable.

3. The valve combination according to claim 1 or 2, **characterized in that** the servo valve (14) in the cable connector head (12) may be used as a direct-acting valve.

4. The valve combination according to any of the preceding claims, **characterized in that** the intermediate plate (40) provides an adaptation between differing connection configurations of the cable connector head (12) and the main valve (10).

5. The valve combination according to any of the preceding claims, **characterized in that** nonreturn valves (48, 50, 52) are arranged in the connection bores (42, 44, 46) on the side of the main valve (10).

6. The valve combination according to claim 5, **characterized in that** the nonreturn valves (48, 50, 52) are compulsorily opened when the pipe nipples (54, 56, 58) are inserted into the connection bores (42, 44, 46).

7. The valve combination according to any of the preceding claims, **characterized in that** the main valve (10) is embodied as a diaphragm valve.

8. The valve combination according to any of the preceding claims, **characterized in that** the servo valve (14) is embodied as a miniature flipper valve.

## Revendications

1. Combinaison de valves comprenant une valve principale (10) pilotée et une valve de pilotage (14) qui est intégrée dans une tête de câble (12) qui peut être reliée par la voie fluidique avec la valve principale (10), **caractérisée en ce que** la tête de câble (12) est accouplée à la valve principale (10) au moyen d'une plaque intermédiaire (40), la plaque intermédiaire (40) étant pourvue de perçages de raccordement (42, 44, 45, 46) dans lesquels sont introduits des manchons tubulaires (54, 56, 58) qui sortent hors de la tête de câble.

2. Combinaison de valves selon la revendication 1, **caractérisée en ce que** la tête de câble (12) présente un dispositif de connexion rapide électrique (18) pour un câble électrique.

3. Combinaison de valves selon la revendication 1 ou 2, **caractérisée en ce que** la valve de pilotage (14) peut être utilisée dans la tête de câble (12) à titre de valve à action directe.

4. Combinaison de valves selon l'une des revendications précédentes, **caractérisée en ce que** la plaque intermédiaire (40) fournit une adaptation entre les différentes configurations de raccordement entre la tête de câble (12) et la valve principale (10).

5. Combinaison de valves selon l'une des revendications précédentes, **caractérisée en ce que** dans les perçages de raccordement (42, 44, 46), des soupapes de non-retour (48, 50, 52) sont agencées sur le côté de la valve principale (10).

6. Combinaison de valves selon la revendication 5, **caractérisée en ce que** les soupapes de non-retour (48, 50, 52) sont ouvertes de manière forcée en insérant les manchons tubulaires (54, 56, 58) dans les perçages de raccordement (42, 44, 46).

7. Combinaison de valves selon l'une des revendications précédentes, **caractérisée en ce que** la valve principale (10) est réalisée sous forme de valve à diaphragme.

8. Combinaison de valves selon l'une des revendications précédentes, **caractérisée en ce que** la valve de pilotage (14) est réalisée sous forme de valve miniature à fuseau.
